# EUROPEAN PATENT APPLICATION

(11) **EP 2 106 694 A1**
(43) Date of publication of application: **07.10.2009**
(21) Application number: 08153988.4
(22) Date of filing: 02.04.2008
(51) Int. Cl.: A01M 7/00

(54) **A Spraying Device**

(71) Applicant: Lennon, Damien, Threecastles Kilkenny (IE)
(72) Inventor: Lennon, Damien, Threecastles Kilkenny (IE)
(74) Representative: Roche, Dermot

(57) **Abstract**

An agricultural spraying device (1) comprises a spray boom (2), a first frame element (3), and a second frame element (4). The spray boom (2) comprises a plurality of spray outlets through which weed killer may be sprayed on the ground. The frame elements (3, 4) are employed to attach the spray boom (2) to the front end of a tractor. The frame elements (3, 4) are configured to facilitate selective movement of the spray boom (2) relative to the tractor. The first frame element (3) enables the spray boom (2) to move substantially vertically relative to the tractor. The second frame element (4) enables the spray boom (2) to move substantially horizontally relative to the tractor. The spray boom (2) is rotatable relative to the second frame element (4), and thus relative to the tractor. The spray boom (2) comprises three boom sections (12, 13, 14). The first boom section (12) is rotatable relative to the second boom section (13), and the second boom section (13) is rotatable relative to the third boom section (14).

## Description

### Introduction

This invention relates to an agricultural spraying device for spraying a fluid such as a weed killer, or a pesticide on the ground.

### Statements of Invention

According to the invention there is provided a spraying device comprising a spray boom, the spray boom comprising one or more spray outlets through which a fluid may be sprayed on the ground.

In one embodiment of the invention the spraying device comprises means for attachment of the spray boom to a vehicle. The spraying device may thus be used to quickly spray large areas of ground. Preferably the attachment means comprises one or more frame elements.

In one case the attachment means is configured to facilitate selective movement of the spray boom relative to a vehicle. Preferably the distance which the spray boom extends from a vehicle is adjustable. The spray boom may be movable substantially horizontally relative to a vehicle. Ideally the height of the spray boom relative to a vehicle is adjustable. The spray boom may be movable substantially vertically relative to a vehicle. Most preferably the inclination of the spray boom relative to a vehicle is adjustable. The spray boom may be rotatable relative to a vehicle. By enabling the spray boom to move relative to the vehicle, this arrangement ensures maximum flexibility during the spraying operation. In particular the spraying device may be used to spray the ground adjacent to the vehicle which may have a different height and/or inclination to the ground upon which the vehicle is travelling. This may be particularly advantageous in the case where the spraying device is employed to spray an embankment adjacent to a roadway. In addition the spraying device may be used to reach awkward or difficult to access areas of ground.

In another embodiment the spray boom comprises two or more boom sections, at least a first boom section being selectively movable relative to a second boom section. Preferably the inclination of the first boom section relative to the second boom section is adjustable. Ideally the first boom section is rotatable relative to the second boom section. By enabling the boom sections to move relative to one another, this arrangement ensures maximum flexibility during the spraying operation. In particular the spraying device may be used to spray the ground adj acent to the vehicle which may be undulating or curved. This may be particularly advantageous in the case where the spraying device is employed to spray an embankment adjacent to a roadway.

In another case the spray boom is selectively movable between a storage configuration and an operational configuration. The storage configuration enables the vehicle to quickly travel to the site of spraying in a safe manner. Preferably the spray boom is substantially collapsed in the storage configuration. Ideally in the storage configuration, two or more of the sections of the spraying arm are nested together. Most preferably the spray boom is substantially extended in the operational configuration.

In another aspect of the invention there is provided a spraying system comprising:
a vehicle, and
a spraying device of the invention attached to the vehicle.

### Brief Description of the Drawings

The invention will be more clearly understood from the following description of an embodiment thereof, given by way of example only, with reference to the accompanying drawings, in which:
Fig. 1 is an isometric view from the front of a spraying device according to the invention,

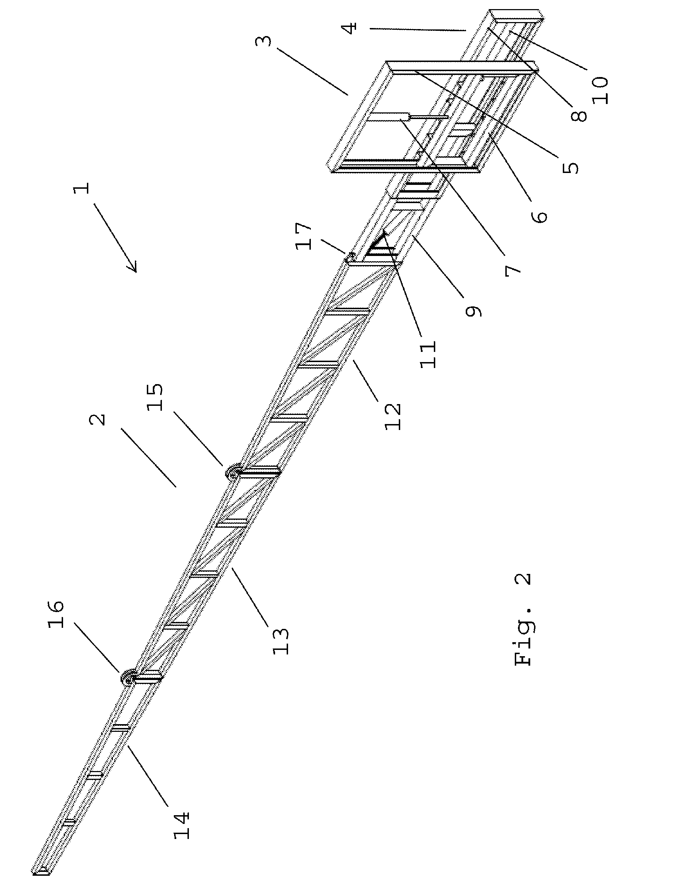

Fig. 2 is an isometric view from the rear of the spraying device of Fig. 1,

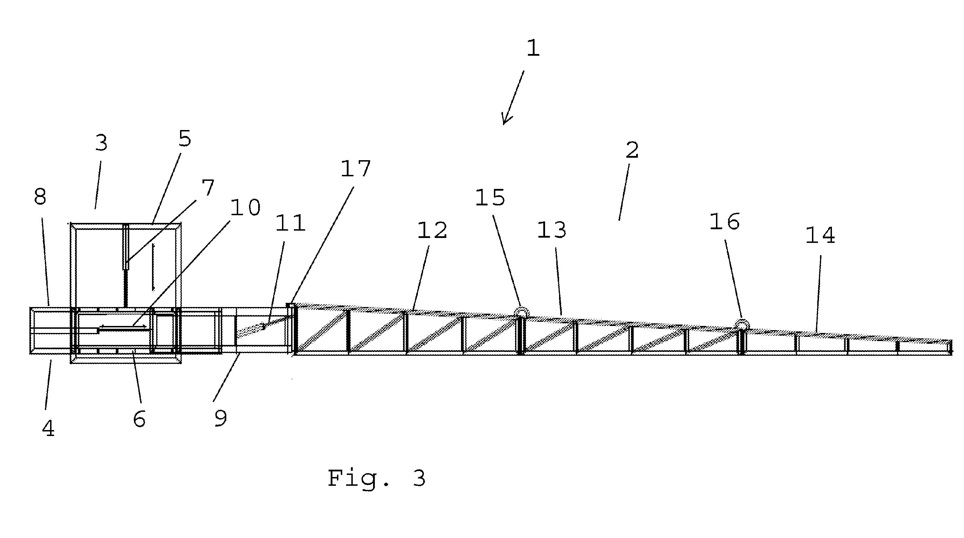

Fig. 3 is a front view of the spraying device of Fig. 1, and
Fig. 4 is another front view of the spraying device of Fig. 1.

### Detailed Description

Referring to the drawings there is illustrated an agricultural spraying device 1 according to the invention. The spraying device 1 comprises a spray boom 2, a first frame element 3, and a second frame element 4.

The spray boom 2 comprises a plurality of spray outlets through which a fluid, such as a weed killer, or a pesticide may be sprayed on the ground.

The frame elements 3, 4 are employed to attach the spray boom 2 to the front end of a motor vehicle, such as a tractor. Together the tractor and the spraying device 1 attached to the tractor form a spraying system.

The frame elements 3, 4 are configured to facilitate selective movement of the spray boom 2 relative to the tractor. The movements of the spraying arm 2 may be controlled from the cab of the tractor.

In particular the first frame element 3 comprises a first frame part 5 which is fixedly attached to the front end of the tractor, and a second frame part 6 slidably movable relative to the first frame part 5 by means of a vertical hydraulic piston/ram arrangement 7. The first frame element 3 enables the spray boom 2 to move substantially vertically relative to the tractor. In this manner the height of the spray boom 2 relative to the tractor may be adjusted.

Similarly the second frame element 4 comprises a third frame part 8 which is fixedly attached to the second frame part 6, and a fourth frame part 9 slidably movable relative to the third frame part 8 by means of a horizontal hydraulic piston/ram arrangement 10. The second frame element 4 enables the spray boom 2 to move substantially horizontally relative to the tractor. In this manner the distance which the spray boom 2 extends laterally from the tractor may be adjusted.

In further detail the first frame part 5 is a fixed frame which does not move, with the second frame part 6 inside the first frame part 5. The second frame part 6 is able to move up and down by means of the hydraulic piston/ram arrangement 7. Attached to the second frame part 6 is the third frame part 8, which is also a fixed frame. The fourth frame part 9 is inside the third frame part 8. The fourth frame part 9 is able to move side to side horizontally. The fourth frame part 9 is moved in and out on the third frame part 8 by the hydraulic piston/ram arrangement 10.

Further the spray boom 2 is pivotably attached to the fourth frame part 9 at a first hinge point 17. The spray boom 2 is rotatable relative to the fourth frame part 9, and thus relative to the tractor, by means of a hydraulic piston/ram arrangement 11. In this manner the inclination of the spray boom 2 relative to the tractor may be adjusted.

In this case the spray boom 2 is rotatable by up to 180 degrees relative to the fourth frame part 9.

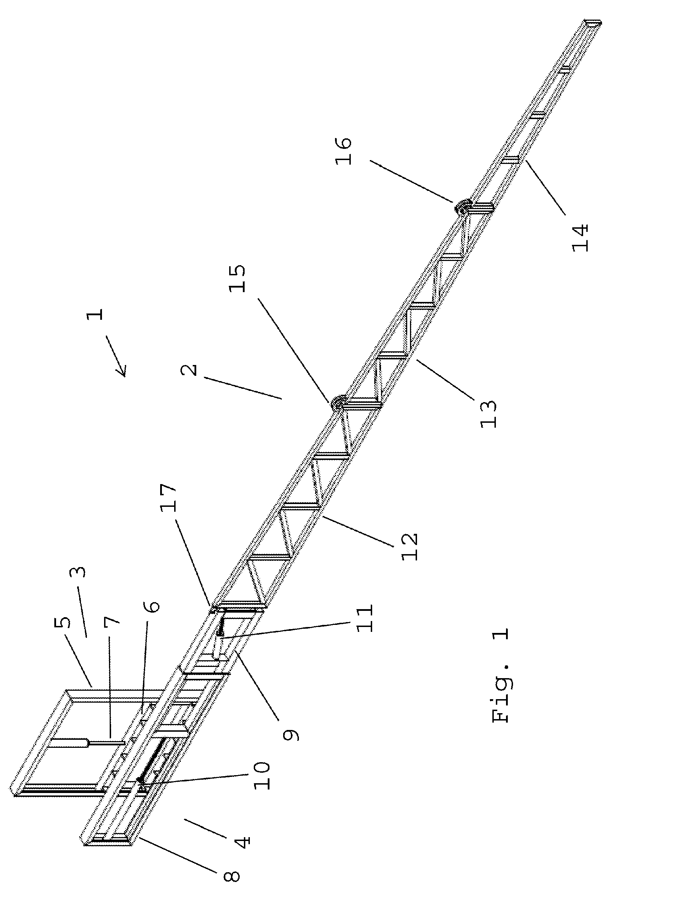

The hydraulic piston/ram arrangement 11 is located within the fourth frame part 9 in this case, as illustrated in Fig. 1. However it will be appreciated that the hydraulic piston/ram arrangement 11 may alternatively be located along the upper face of the fourth frame part 9 to increase the power available for rotating the spray boom 2.

The spray boom 2 comprises three boom sections 12, 13, 14. The first boom section 12 is pivotably attached to the second boom section 13 at a second hinge point 15, and the second boom section 13 is pivotably attached to the third boom section 14 at a third hinge point 16.

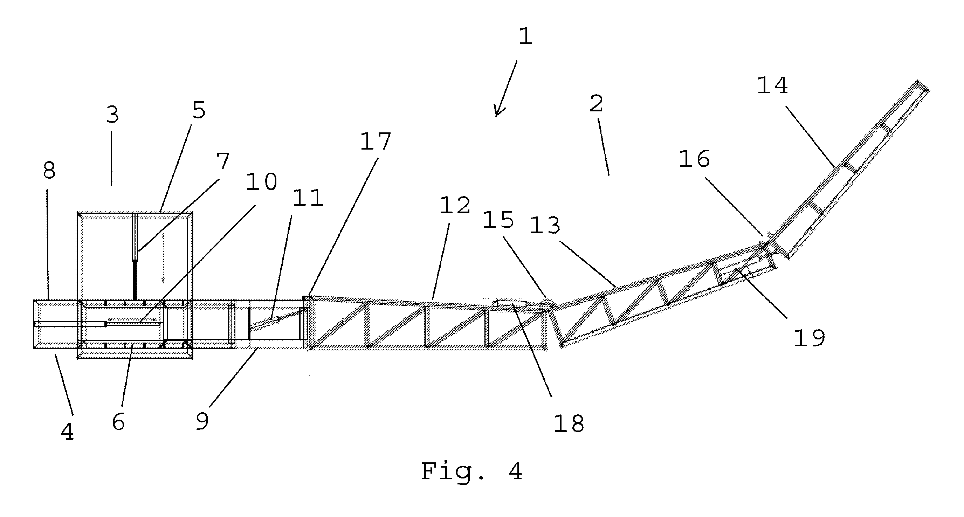

The first boom section 12 is selectively rotatable relative to the second boom section 13 by means of a hydraulic piston/ram arrangement 18. In this manner the inclination of the first boom section 12 relative to the second boom section 13 may be adjusted, as illustrated in Fig. 4. In this case the first boom section 12 is rotatable by up to 180 degrees relative to the second boom section 13.

Similarly the second boom section 13 is selectively rotatable relative to the third boom section 14 by means of a hydraulic piston/ram arrangement 19. In this manner the inclination of the second boom section 13 relative to the third boom section 14 may be adjusted, as illustrated in Fig. 4. In this case the second boom section 13 is rotatable by up to 180 degrees relative to the third boom section 14.

This arrangement enables the boom sections 12, 13, 14 to be located at a desired distance from the ground being sprayed to optimise the spraying effect. For example in the case of spraying weed killer, it may be desirable for the boom sections 12, 13, 14 to be located approximately 45 to 60 cm (18 to 24 inches) above the ground level. This is especially important in the case where the contour of the ground is undulating or changing as the vehicle moves forwards. This arrangement enables the spraying device 1 to accommodate a varying angle of an embankment along the embankment length.

By rotating the third boom section 14 through 180° relative to the second boom section 13, and then rotating the second boom section 13 through 180° relative to the first boom section 12, and then rotating first boom section 12 through 180° relative to the third frame part 8, the spray boom 2 may be selectively moved from an operational configuration to a compact storage configuration. In the operational configuration the spray boom 2 is substantially extended (Fig. 1). In the storage configuration the spray boom is substantially collapsed with the boom sections 12, 13, 14 nested together.

Each of the boom sections 12, 13, 14 is tapered inwardly away from the tractor. The tapered shapes facilitate ease of collapse to the storage configuration.

In further detail the fourth frame part 9 is attached to the first boom section 12. The first boom section 12 may move round in 180° back over the third frame part 8. This is done by means of the hydraulic piston/ram arrangement 11. The first boom section 12 may move up and down to match the contours of the land and fold back for transporting. Attached to the first boom section 12 is the second boom section 13 to extend the length of the spray boom 2 outwards. This may be repeated a number of times to reach the desired dimension for the spray boom 2.

Each boom section 12, 13, 14 may move up and down independently of one another by way of the rams 18, 19 which are on a bracket. All of these rams 18, 19 may be moved by a control panel in the cab of the tractor.

The spray boom 2 acts as a reaching arm. The spraying arm 2 is configured to reach vertical and/or horizontal embankments of any angle so that it is not necessary for any spraying to be done by hand. The spraying arm 2 is configured to reach noxious weeds on roadsides and other steep embankments.

In use, the tractor is driven to the site of spraying with the spray boom 2 in the storage configuration. The spray boom 2 is moved from the storage configuration to the operational configuration by rotating the first boom section 12 through 180° relative to the third frame part 8, and then rotating the second boom section 13 through 180° relative to the first boom section 12, and then rotating the third boom section 14 through 180° relative to the second boom section 13.

The height of the spray boom 2 is adjusted relative to the tractor by moving the spray boom 2 vertically relative to the tractor. Similarly the distance which the spray boom 2 extends laterally from the tractor is adjusted by moving the spray boom 2 substantially horizontally relative to the tractor. Further the inclination of the spray boom 2 relative to the tractor is adjusted by rotating the spray boom 2 relative to the fourth frame part 9.

The inclination of the first boom section 12 relative to the second boom section 13 is adjusted by rotating the first boom section 12 relative to the second boom section 13. Similarly the inclination of the second boom section 13 relative to the third boom section 14 is adjusted by rotating the second boom section 13 relative to the third boom section 14 until the boom sections 12, 13, 14 are located at a desired distance from the ground being sprayed.

The spray boom 2 is then used to spray a fluid, such as a weed killer, or a pesticide on the ground.

Parts of the spraying device 1 according to the invention are described herein as being movable by means of hydraulic piston/ram arrangements. However it will be appreciated that the movement could be achieved by a variety of alternative mechanisms, for example by means of an electromechanical motor arrangement, or a pneumatic arrangement. The invention is not limited to the embodiment hereinbefore described, with reference to the accompanying drawings, which may be varied in construction and detail.

## Claims

1. A spraying device comprising a spray boom, the spray boom comprising one or more spray outlets through which a fluid may be sprayed on the ground.

2. A spraying device as claimed in claim 1 wherein the spraying device comprises means for attachment of the spray boom to a vehicle.

3. A spraying device as claimed in claim 2 wherein the attachment means is configured to facilitate selective movement of the spray boom relative to a vehicle.

4. A spraying device as claimed in claim 3 wherein the distance which the spray boom extends from a vehicle is adjustable.

5. A spraying device as claimed in claim 4 wherein the spray boom is movable substantially horizontally relative to a vehicle.

6. A spraying device as claimed in any of claims 3 to 5 wherein the height of the spray boom relative to a vehicle is adjustable.

7. A spraying device as claimed in claim 6 wherein the spray boom is movable substantially vertically relative to a vehicle.

8. A spraying device as claimed in any of claims 3 to 7 wherein the inclination of the spray boom relative to a vehicle is adjustable.

9. A spraying device as claimed in any of claims 1 to 8 wherein the spray boom comprises two or more boom sections, at least a first boom section being selectively movable relative to a second boom section.

10. A spraying device as claimed in claim 9 wherein the inclination of the first boom section relative to the second boom section is adjustable.

11. A spraying device as claimed in any of claims 1 to 10 wherein the spray boom is selectively movable between a storage configuration and an operational configuration.

12. A spraying device as claimed in claim 11 wherein the spray boom is substantially collapsed in the storage configuration.

13. A spraying device as claimed in claim 11 or 12 wherein in the storage configuration, two or more of the boom sections of the spray boom are nested together.

14. A spraying device as claimed in any of claims 11 to 13 wherein the spray boom is substantially extended in the operational configuration.

15. A spraying system comprising:
a vehicle, and
a spraying device as claimed in any of claims 1 to 14 attached to the vehicle.
